# EUROPEAN PATENT APPLICATION

(11) **EP 3 560 935 A1**
(43) Date of publication of application: **30.10.2019**
(21) Application number: 18168733.6
(22) Date of filing: 23.04.2018
(51) Int. Cl.: C07F 7/08, C01B 15/022

(54) **METHOD FOR OBTAINING PEROXIDES USING ORGANOSILICON AGENTS**

(71) Applicant: ETH Zürich, 8092 Zürich (CH); Osaka University, Suita-shi Osaka 565-0871 (JP)
(72) Inventor: COPÉRET, Christophe, 8037 Zürich (CH); YAMAMOTO, Keishi, Tsukuba, Ibaraki (JP); MASHIMA, Kazushi, 563-0042 Ikeda Osaka (JP); TSURUGI, Hayato, 561-0862 Toyonaka Osaka (JP)
(74) Representative: Maikowski & Ninnemann Patentanwälte Partnerschaft mbB

(57) **Abstract**

The present invention relates to a method for obtaining peroxides of the general formula (I)

R₁-O-O-R₂ (I)

by reacting a cyclodiene compound of the general formula (IIa, b) 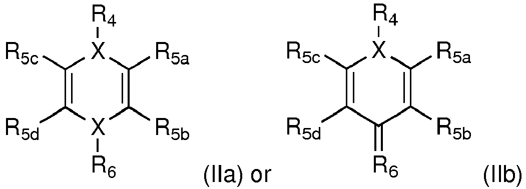 with molecular oxygen ¹⁵O₂, ¹⁶O₂, ¹⁷O₂ or ¹⁸O₂, or a mixture thereof.

## Description

Oxygenation is one of the most fundamental chemical transformations, with direct applications in industrial processes. Ideally, molecular oxygen is the most atom-economical and environmentally friendly primary oxidant. It is however rarely used as a primary oxidant in low temperature homogeneous processes. This is a consequence of the kinetic inertness of O₂, due to its triplet ground state. In fact, in nature, O₂ activation is accomplished by (mono- or di-) oxygenases, where riboflavin-based coenzymes activate O₂ under mild conditions to form a hydroperoxide intermediate, which is then used to transfer the oxygen atom to the substrates, in reactions such as phenol hydroxylation, Baeyer-Villiger oxidation, olefin epoxidation, hypochlorous formation etc. Similarly, in industrial processes, O₂ is reacted with hydrocarbon to generate alkyl hydroperoxide or transformed into H₂O₂ via the anthraquinone process.

Because isotopically labeled hydrogen peroxide, H₂O₂ (H = ¹H, ²H, ³H; O = ¹⁵O, ¹⁶O, ¹⁷O, ¹⁸O, except for ¹H₂¹⁶O₂ and ¹H₂¹⁸O₂) is commercially not available, they are in general synthesized in each laboratory when necessary. In common organic, inorganic, and bio engineering laboratories, the ways to produce isotopically labeled H₂O₂ are, however, rather limited.

The typical method is the above mentioned anthraquinone method. Here 2-ethyl anthraquinone is hydrogenated in 1-decanol at 2 atm by a Pd/C catalyst to give the corresponding anthradihydroquinone, which reacts with O₂ gas to give H₂O₂ in the solvent medium. H₂O₂ is extracted with deionized water from the solvent medium, followed by distillation and concentration if necessary, giving aqueous H₂O₂ in ca. 80% yield (to O₂ gas used). Since ¹⁵O₂, ¹⁷O₂ and ¹⁸O₂ are quite expensive, the conversion efficiency of O₂ gas is the most important factor.

The above-mentioned method is not convenient because of the following reasons: 1) Hydrogen apparatus for high pressure reaction is needed. 2) Trace organic impurities derived from 2-ethyl anthraquinone can contaminate aqueous H₂O₂. 3) Plenty of 1-decanol is used as the solvent to dissolve 2-ethyl anthraquinone, hence plenty of deionized water needs to be used during the extraction from the reaction medium. As a result, the concentration of the obtained aqueous H₂O₂ is low, which is not appropriate for some organic transformations, and 4), if needed, distillation and concentration of the aqueous H₂O₂ is required. However, there is a risk that H₂O₂ decomposes during the process because H₂O₂ is thermally sensitive.

Silylated peroxides, such as Bis(trialkylsilyl)peroxide, (R₃Si)₂O₂, are commonly prepared by reaction of H₂O₂-urea with R₃SiCl. Accordingly, to obtain isotopically labeled (R₃Si)₂O₂ (O = ¹⁷O, ¹⁸O), preparation of the corresponding isotopically labeled H₂O₂ (O = ¹⁷O, ¹⁸O) and isolation as H₂O₂-urea are required in advance.

As easily can be seen the presently applied methods for obtaining peroxides using molecular oxygen are cumbersome and tedious and require high pressure equipment.

It was therefore an object of the present invention to provide a method for obtaining peroxides, which can be conducted in a simple manner and at atmospheric pressure.

This object is solved by a method with the features of claim 1.

Accordingly, a method for obtaining peroxides of the general formula (I)

R₁-O-O-R₂ (I)

wherein
R₁, R₂ can be the same or different,
R₁, R₂ being H, D (²H), T(³H), -Si (R₃ₐ, R_{3b}, R_{3c})₃, with R_{3a,} R_{3b,} R_{3c} being H, substituted or unsubstituted linear or branched C1-C10 alkyl, or substituted or unsubstituted C6-C12 aryl wherein in each case one or multiple carbon atoms can be substituted by one or multiple oxygen atoms, sulphur atoms, substituted nitrogen atoms, selenium atom, boron atom, double bonds and/or by one or multiple groups of the type -C(O)O-, -C(O)-, -C(O)-H, -NHC(O)O-, -OC(O)NH- and/or -OC(O)O-; and/or can be functionalized by one or multiple hydroxyl groups, amino groups, seleno groups and/or mercapto groups, R₃ₐ, R_{3b}, R_{3c} being the same or different, and
O is ¹⁵O, ¹⁶O, ¹⁷O, or ¹⁸O, or a mixture thereof,
is provided, wherein
a cyclodiene compound of the general formula (II) 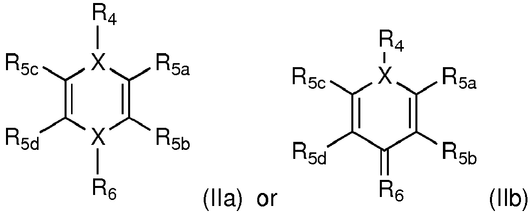 wherein
X being CH, CD, CT or N,
R₄ being -Si (R₃ₐ, R_{3b}, R_{3c})₃, with R₃ₐ, R_{3b}, R_{3c} having the above meaning,
R₅ₐ, R_{5b}, R_{5c}, R_{5d} being H, D, T, substituted or unsubstituted linear or branched C1-C10 alkyl, substituted or unsubstituted C1-C10 alkoxy or substituted or unsubstituted C6-C12 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, - C(O)-H, -NHC(O)O-, -OC(O)NH- and/or -OC(O)O-; and/or can be functionalized by one or multiple hydroxyl groups, amino groups and/or mercapto groups, wherein R₅ₐ, R_{5b} and R_{5c}, R_{5d} can be part of a cyclic structure respectively; R₅ₐ, R_{5b}, R_{5c}, R_{5d} being the same or different;
R₆ being -Si (R₃ₐ, R_{3b}, R_{3c})₃, with R₃ₐ, R_{3b}, R_{3c} having the above meaning in case of general formulae (IIa), or
R₆ being 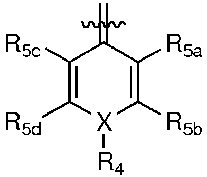
in case of general formula (IIb) wherein X, R₄ and R₅ₐ, R_{5b}, R_{5c}, R_{5d} having the above meaning
is reacted with molecular oxygen ¹⁵O₂, ¹⁶O₂, ¹⁷O₂ or ¹⁸O₂, or a mixture thereof.

Thus, a method for the synthesis of peroxides is provided that does not require the use of a complex hydrogenation apparatus. Any by-products formed can be easily removed from the reaction mixture, for example by washing with pentane, giving analytically pure aqueous peroxide, such as H₂O₂. The use of organic solvent can be minimized or even avoided. High concentration of peroxide, for example in case of H₂O₂ to about 15 wt%, can be obtained with still further possibility for concentration. In case of silylated peroxides such as (R₃Si)₂O₂ the reaction steps for the production of (R₃Si)₂O₂ from O₂ are reduced because the additional process via H₂O₂ is not needed.

In an embodiment of the present method the molecular oxygen ¹⁵O₂, ¹⁶O₂, ¹⁷O₂ or ¹⁸O₂ is added to the reaction mixture in a ratio of ratio 0.1 - 1000 equivalents, preferably 0.5 - 500 equivalents, more preferably 1-100 equivalents in respect to the cyclodiene of general formula (IIa,b). In some embodiments the molecular oxygen is added in a ratio of 0.8 - 50 equivalents, preferably 0.8 - 10 equivalents, more preferably 0.8 -1.5 equivalents, most preferably 1-1.3 equivalents in respect to the cyclodiene of general formula (IIa,b). It is to be understood that O₂ can be used as part of a gasous mixture like Synhetic Air, O₂/Ar and O₂/N₂, O₂/Ar mixture.

It is also possible to add molecular oxygen according to the formulae nO-mO with n different from m and n, m = 15, 16, 17 and 18.

In a further embodiment of the present method the reaction is carried out at a partial pressure below or above atmospheric pressure, preferably at atmospheric pressure. This has the advantage that complex lab systems can be avoided.

In one embodiment of the method the moieties R₁ and R₂ of general formula (I) are the same or different and are H, D (²H), T (³H), -Si (R₃ₐ, R_{3b}, R_{3c})₃, with R₃ₐ, R_{3b}, R_{3c} being H, substituted or unsubstituted linear or branched C1-C10 alkyl, or substituted or unsubstituted C6-C12 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, -NHC(O)O-, -OC(O)NH- and/or -OC(O)O-.

In yet another embodiment of the method the moieties R₁ and R₂ of general formula (I) are the same or different and are H, D or -Si (R₃ₐ, R_{3b}, R_{3c})₃, with R₃ₐ, R_{3b}, R_{3c} being substituted or non-substituted C1-C5 alkyl, more preferably substituted or non-substituted C1-C3 alkyl. Specifically, the moieties R₁ and R₂ of general formula (I) are the same or different and are H or -Si (R₃ₐ, R_{3b}, R_{3c})₃, with R₃ₐ, R_{3b}, R_{3c} being methyl, ethyl, n-propyl, isopropyl. For example, the peroxides obtained by the present method may be H₂O₂, (Me₃Si)₂O₂ or (Et₃Si)₂O₂.

In a variant of the present method the moieties R₅ₐ, R_{5b}, R_{5c}, R_{5d} are H, D, T, substituted or unsubstituted linear or branched C1-C10 alkyl, substituted or unsubstituted C1-C10 alkoxy or substituted or unsubstituted C6-C12 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, - NHC(O)O-, -OC(O)NH- and/or -OC(O)O-;wherein R₅ₐ, R_{5b} and R_{5c}, R_{5d} can be part of a cyclic structure respectively; R₅ₐ, R_{5b}, R_{5c}, R_{5d} being the same or different.

In still another variant of the present method the moieties R₅ₐ, R_{5b}, R_{5c}, R_{5d} are H, substituted or unsubstituted linear or branched C1-C5 alkyl, preferably substituted or non-substituted C1-C3 alkyl, in particular methyl, ethyl, n-propyl, isopropyl or, substituted or unsubstituted C1-C5, alkoxy, preferably methoxy and ethoxy.

In a further variant of the present method it is conceivable that the moieties R₅ₐ, R_{5b} and R_{5c}, R_{5d} are part of C6 aryl ring according to one of the following structures (III) or (IV): 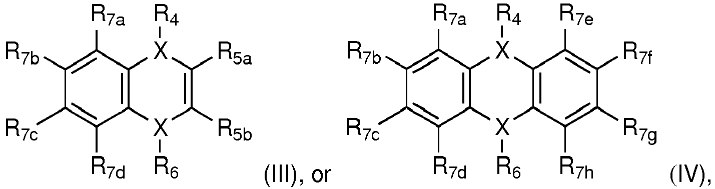 wherein
R₄, R₆, R₅ₐ, R_{5b} and X have the above meaning, and
R₇ₐ₋ₕ being H, D, T, substituted or unsubstituted linear or branched C1-C10 alkyl, substituted or unsubstituted C1-C10 alkoxy or substituted or unsubstituted C6-C12 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, -C(O)-H, -NHC(O)O-, -OC(O)NH- and/or -OC(O)O-; and/or can be functionalized by one or multiple hydroxyl groups, amino groups and/or mercapto groups, and R₇ₐ₋ₕ being the same or different.

In a variant the moieties R₇ₐ₋ₕ are H, D, T substituted or unsubstituted linear or branched C1-C5 alkyl, , substituted or unsubstituted C1-C10 alkoxy or substituted or unsubstituted C6-C10 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, -NHC(O)O-, -OC(O)NH- and/or -OC(O)O-, and R₇ₐ₋ₕ being the same or different.

In still another variant of the present method the moieties R₇ₐ₋ₕ are H, substituted or unsubstituted linear or branched C1-C5 alkyl, preferably substituted or non-substituted C1-C3 alkyl, in particular methyl, ethyl, n-propyl, isopropyl or , substituted or unsubstituted C1-C5, alkoxy, preferably methoxy and ethoxy.

In more specific embodiments the cyclodiene may be of one of the following structures (V)-(VII): 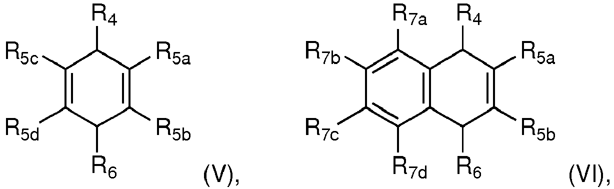 or 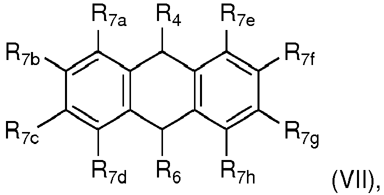 wherein R₄, R₆, R₅ₐ, R_{5b}, R_{5c}, R_{5d}, and R₇ₐ₋ₕ have the above meaning.

It is particularly preferred that a trimethylsilyl group is used for both of R₄ and R₆ positions and methyl or methoxy groups are used at R₅ₐ position (R_{b-d} = H) for the above structures V-VII, in particular in case of structure V.

In further more specific embodiments the cyclodiene may be of one of the following structures (VIII)-(XI): 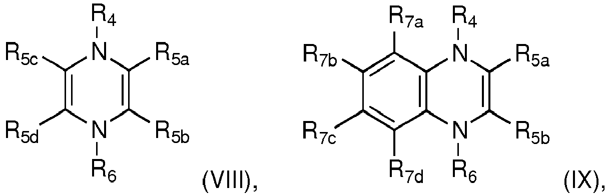 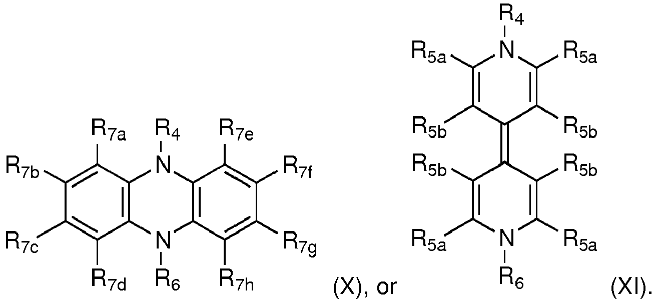 wherein R₄, R₆, R₅ₐ, R_{5b}, R_{5c}, R_{5d}, and R₇ₐ₋ₕ have the above meaning.

In some embodiments a trimethylsilyl group for both of R₄ and R₆ positions and a methyl group on R_{5a/5d} (R_{5b,5c} = H) or on R_{5a-d} for the structure VIII, a trimethylsilyl group for both of R₄ and R₆ positions and an ethyl group on R_{5a/5b} (R_{7a-d} = H) for the structure IX, a trimethylsilyl group for both of R₄ and R₆ positions and hydrogen on R₇ₐ₋ₕ for the structure X, a trimethylsilyl group for both of R₄ and R₆ positions and hydrogen on R_{5a-d} for the structure XI are preferred.

The term "substituted" in connection to alkyl and aryl relates to the substitution of one or more atoms, usually H-atoms, by one or more of the following substituents: halogen, hydroxy, protected hydroxy, oxo, protected oxo, C₃-C₇-cycloalkyl, phenyl, naphthyl, amino, protected amino, primary, secondary or tertiary amino, heterocyclic ring, imidazolyl, indolyl, pyrrolidinyl, C₁-C₁₂-alkoxy, C₁-C₁₂-acyl, C₁-C₁₂-acyloxy, nitro, carboxy, carbamoyl, carboxamid, N-(C₁-C₁₂-alkyl)carboxamid, N,N-Di(C₁-C₁₂-alkyl)carboxamid, cyano, methylsulfonylamino, thiol, C₁-C₁₀-alkylthio und C₁-C₁₀-alkylsulfonyl. The substituted groups can be once or twice substituted with same or different substituents.

Examples for the above substituted alkyl groups comprise 2-oxo-prop-1-yl, 3-oxo-but-1-yl, cyanomethyl, nitromethyl, chlormethyl, hydroxymethyl, tetrahydropyranyloxymethy, trityloxymethyl, propionyloxymethyl, aminomethyl, carboxymethyl, allyloxycarbonylmethyl, allyloxycarbonylaminomethyl, methoxymethyl, ethoxymethyl, t-butoxymethyl, acetoxymethyl, chlormethyl, brommethyl, iodmethyl, trifluormethyl, 6-hydroxyhexyl, 2,4-dichlor(n-butyl), 2-aminopropyl, 1-chloroethyl, 2-chloroethyl, 1-bromoethyl, 2-bromoethyl, 1-fluoroethyl, 2-fluoroethyl, 1-iodoethyl, 2-iodoethyl, 1-chloropropyl, 2-chloropropyl, 3-chloropropyl, 1-bromopropyl, 2-bromopropyl, 3-bromopropyl, 1-fluoropropyl, 2-fluoropropyl, 3-fluoropropyl, 1-iodopropyl, 2-iodopropyl, 3-iodopropyl, 2-aminoethyl, 1-aminoethyl, N-benzoyl-2-aminoethyl, N-acetyl-2-aminoethyl, N-benzoyl-1-aminoethyl, N-acetyl-1-aminoethyl and alike.

The term "C₁-C₁₂-alkyl" relates to moieties like methyl, ethyl, n-propyl, isopropyl, n-butyl, isobutyl, s-butyl, t-butyl, amyl, t-amyl, hexyl, heptyl, octyl, nonyl, decyl, undecyl, dodecyl, and alike. Preferred C₁-C₁₂-alkyl groups are methyl, ethyl, isobutyl, s-butyl und isopropyl.

The term "oxo" relates to a carbon atom, which is connected with an oxygen atom via a double bond whereby a keto or an aldehyde group is formed. The term "protected oxo" relates to a carbon atom, which is substituted by two alkoxy groups or is connected twice with a substituted diol forming a non-cyclic or cyclic ketal group.

The term "alkoxy" relates to moities like methoxy, ethoxy, n-propoxy, isopropoxy, n-butoxy, t-butoxy and alike. A preferred alkoxy group is methoxy.

It a further variant of the present method the moieties R₄ and R₆ are -Si (R₃ₐ, R_{3b}, R_{3c})₃, with R₃ₐ, R_{3b}, R_{3c} being C1-C3 alkyl, in particular methyl, ethyl, n-propyl, isopropyl.

In a very specific embodiment of the present method the cyclodiene of general formulae (IIa) is

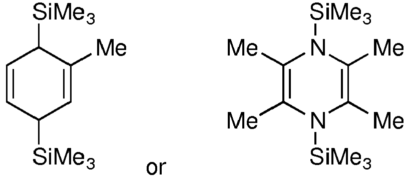

The cyclodiene of general formula (IIb) may also be one of

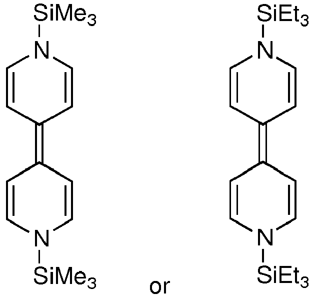

The reaction of the present method is carried out in water, in an organic solvent or in a mixture thereof. The organic solvent may be selected from a group comprising dichloromethane, t-butanol, ethanol, methanol, toluene, methyl-t-butyl-ether, acetonitrile, tetrahydrofuran, N-methyl-2-pyrrolidone. However, any other suitable organic solvent may be used.

The invention is described in the following in more detail by means of several examples.

### Example 1:

At ambient temperature and atmospheric pressure, a reaction of O₂ (1 equiv.) with 1-methyl-3,6-bis(trimethylsilyl)-1,4-cyclohexadiene in CH₂Cl₂/H₂O for 16 hours produces H₂O₂ in 81% yield in the water phase. The aqueous H₂O₂ phase can be separated or directly used for further oxidation as a one-pot reaction.

### Example 2:

At ambient temperature and atmospheric pressure, a reaction of O₂ (1 equiv.) with 1-methyl-3,6-bis(trimethylsilyl)-1,4-cyclohexadiene in H₂O for 16 hours produces H₂O₂ in 78% yield in the water phase. The aqueous H₂O₂ phase can be separated or directly used for further oxidation in a one-pot reaction.

### Example 3:

At ambient temperature and atmospheric pressure, a reaction of O₂(1 equiv.) with 1-methyl-3,6-bis(trimethylsilyl)-1,4-cyclohexadiene in t-butanol for 16 hours gives H₂O₂ in 93% yield in the solvent medium. The obtained H₂O₂ in t-butanol can be directly used for further oxidation in a one-pot reaction.

Table 1 summarizes the H₂O₂ yields using different solvent systems.

**Table 1: H₂O₂ formation by the reaction of 1 with 02**

| | | |
|---|---|---|
| 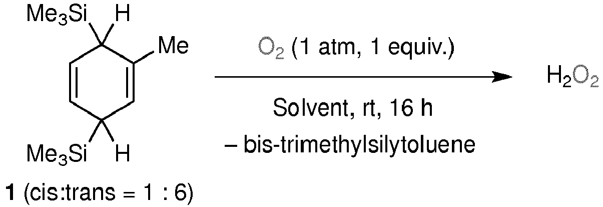 | | |

| **Entry** | **Solvent** | **Yield(%) of H₂O₂** |
|---|---|---|
| 1 | CH₂Cl₂ (9 mL) / H₂O (1 mL) | 81 |
| 2 | CH₂Cl₂ (9 mL) / H₂O (0.4 mL) | 80 |
| 3 | CH₂Cl₂ (9 mL) / H₂O (0.1 mL) | 74 |
| 4 | CH₂Cl₂ (9 mL) | 40 |
| 5 | toluene (9 mL) / H₂O (1 mL) | 79 |
| 6 | MTBE (9 mL) / H₂O (1 mL) | 75 |
| 7 | H₂O (10 mL) | 78 |
| 8 | t-butanol (9 mL) | 93 |
| 9 | CH₃CN (9 mL) | 98 |
| 10 | NMP (9 mL) | 97 |
| 11 | THF (9 mL) | 88 |
| 12*^{a}* | CH₂Cl₂ (9 mL) / H₂O (1 mL) | 46*^{b}* |

| | | |
|---|---|---|
| *^{a}*The reaction is carried out under synthetic air (1 atm, constant). *^{b}*The conversion of **1** is 50%. | | |

### Example 4:

At atmospheric pressure, O₂ (1.3 equiv.) is added to a solution of N,N'- bis(trimethylsilyl)-4,4'-dihydrobipyridine in CH2CI2 at -78 ºC. The solution was warmed to ambient temperature, followed by trap-to-trap distillation to give (Me₃Si)₂O₂ in a 99% yield in CH2CI2.

### Example 5:

At atmospheric pressure, O₂ (1.3 equiv.) is added to a solution of bis(trimethylsilyl)-2,3,5,6-tetramethyldihydropyrazine in CH₂Cl₂ at -78 ºC. The solution was warmed to ambient temperature, followed by trap-to-trap distillation to give (Me₃Si)₂O₂ in a 99% yield in CH2CI2.

### Example 6:

At ambient temperature, synthetic air (1 atm (20%O₂/80%N2), flow) is added to a solution of 1-methyl-3,6-bis(trimethylsilyl)-1,4-cyclohexadiene in CH₂Cl₂/H₂O for 16 hours produces H₂O₂ in 46% yield in the water phase. The aqueous H₂O₂ phase can be separated or directly used for further oxidation as a one-pot reaction.

Table 2 summarizes the (Me₃Si)₂O₂ yields using different solvent systems.

**Table 2: Bistrimethylsilylperoxide (BTSP) formation by the reaction of 2 and 3 with O₂.**

| | | | |
|---|---|---|---|
| 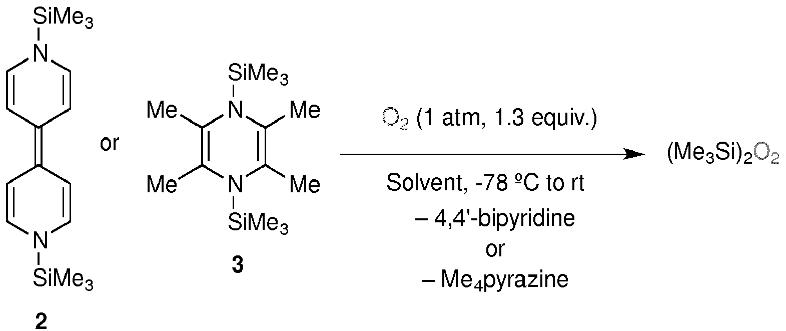 | | | |

| **Entry** | **Reductant** | **Solvent** | **Yield(%) of (Me₃Si)₂O₂** |
|---|---|---|---|
| 1 | **2** | CH₂Cl₂ | 99 |
| 2 | **2** | C₆H₆ | 99 |
| 3 | **2** | Et₂O | 99 |
| 4 | **2** | THF | 99 |
| 5 | **2** | pentane | 99 |
| 6 | **3** | CH₂Cl₂ | 93 |

## Claims

1. Method for obtaining peroxides of the general formula (I)
R₁-O-O-R₂ (I)
wherein
R₁, R₂ can be the same or different,
R₁, R₂ being H, D(²H), T(³H), -Si (R₃ₐ, R_{3b}, R_{3c})₃, with R₃ₐ, R_{3b}, R_{3c} being H, substituted or unsubstituted linear or branched C1-C10 alkyl, or substituted or unsubstituted C6-C12 aryl wherein in each case one or multiple carbon atoms can be substituted by one or multiple oxygen atoms, boron atoms, sulphur atoms, selenium atoms, unsubstituted or substituted nitrogen atoms, double bonds and/or by one or multiple groups of the type -C(O)O-, -C(O)-, -C(O)-H, -NHC(O)O-, -OC(O)NH- and/or -OC(O)O-; and/or can be functionalized by one or multiple hydroxyl groups, halogens, amino groups and/or mercapto or seleno groups, R₃ₐ, R_{3b}, R_{3c} being the same or different, and
O is ¹⁵O, ¹⁶O, ¹⁷O, or ¹⁸O, or a mixture thereof,
by reacting a cyclodiene compound of the general formula (IIa, b) 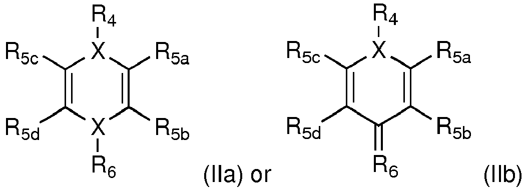 wherein
X being CH, CD, CT or N,
R4 being -Si (R₃ₐ, R_{3b}, R_{3c})₃, with R3a,R3b,R3c having the above meaning,
R₅ₐ, R_{5b}, R_{5c}, R_{5d} being H, D, T, substituted or unsubstituted linear or branched C1-C10 alkyl, substituted or unsubstituted C1-C10 alkoxy or substituted or unsubstituted C6-C12 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, - C(O)-H, -NHC(O)O-, -OC(O)NH- and/or -OC(O)O-; and/or can be functionalized by one or multiple hydroxyl groups, amino groups and/or mercapto groups, wherein R₅ₐ, R_{5b} and R_{5c}, R_{5d} can be part of a cyclic structure respectively; R₅ₐ, R_{5b}, R_{5c}, R_{5d} being the same or different;
R₆ being -Si (R₃ₐ, R_{3b}, R_{3c})₃, with R₃ₐ,R_{3b},R_{3c} having the above meaning in case of general formulae (IIa), or
R₆ being 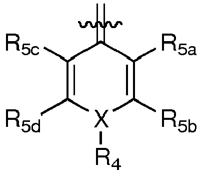
in case of general formula (IIb) wherein X, R₄ and R₅ₐ, R_{5b}, R_{5c}, R_{5d} having the above meaning
with molecular oxygen ¹⁵O₂, ¹⁶O₂, ¹⁷O₂ or ¹⁸O₂, or a mixture thereof.

2. Method according to claim 1, **characterized in that** the molecular oxygen ¹⁵O₂, ¹⁶O₂, ¹⁷O₂ or ¹⁸O₂ is added in a ratio of ratio 0.1 - 1000 equivalents, preferably 0.5 - 500 equivalents, more preferably 1-100 equivalents in respect to the cyclodiene of general formula (II).

3. Method according to one of the preceding claims, **characterized in that** the reaction is carried out at a partial pressures below or above atmospheric pressure, preferably at atmospheric pressure.

4. Method according to one of the preceding claims, **characterized in that** R₁ and R₂ of general formula (I) are the same or different and are H, D, T or -Si (R₃ₐ, R_{3b}, R_{3c})₃, with R₃ₐ, R_{3b}, R_{3c} being substituted or non-substituted C1-C5 alkyl, more preferably substituted or non-substituted C1-C3 alkyl.

5. Method according to one of the preceding claims, **characterized in that** R₁ and R₂ of general formula (I) are the same or different and are H or -Si (R₃ₐ, R_{3b}, R_{3c})₃, with R₃ₐ, R_{3b}, R_{3c} being methyl, ethyl, n-propyl, isopropyl.

6. Method according to one of the preceding claims, **characterized in that** R₅ₐ, R_{5b}, R_{5c}, R_{5d} being H, D, substituted or unsubstituted linear or branched C1-C5 alkyl, preferably substituted or non-substituted C1-C3 alkyl, in particular methyl, ethyl, n-propyl, isopropyl, and the same or different.

7. Method according to one of the claims 1-5, **characterized in that** R₅ₐ, R_{5b} and R_{5c}, R_{5d} are part of C6 aryl ring according to one of the following structures (III) or (IV): 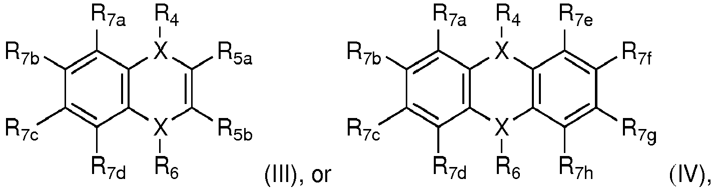 wherein
R₄, R₆, R₅ₐ, R_{5b} and X have the above meaning, and
R₇ₐ₋ₕ being H, substituted or unsubstituted linear or branched C1-C10 alkyl, substituted or unsubstituted C1-C10 alkoxy or substituted or unsubstituted C6-C12 aryl wherein in each case one or multiple carbon atoms can be substituted by one or multiple oxygen atoms, sulphur atoms, substituted nitrogen atoms, double bonds and/or by one or multiple groups of the type -C(O)O-, -C(O)-, -C(O)-H, -NHC(O)O-, -OC(O)NH- and/or -OC(O)O-; and/or can be functionalized by one or multiple hydroxyl groups, amino groups and/or mercapto groups, and R₇ₐ₋ₕ being the same or different.

8. Method according to one of the preceding claims, **characterized by** a cyclodiene of one of the following structures (V)-(VII): 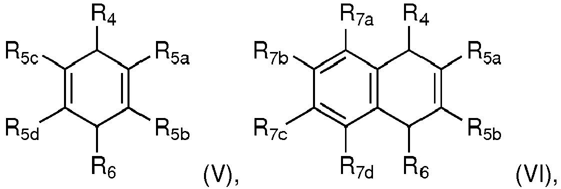 or wherein R₄, R₆, R₅ₐ, R_{5b}, R_{5c}, R_{5d}, and R₇ₐ₋ₕ have the above meaning.

9. Method according to one of the preceding claims, **characterized by** a cyclodiene of one of the following structures (VIII)-(XI): 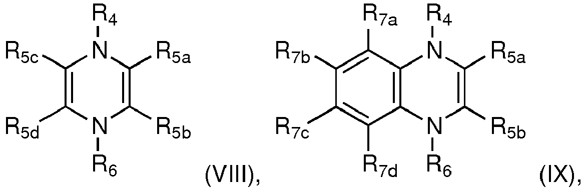 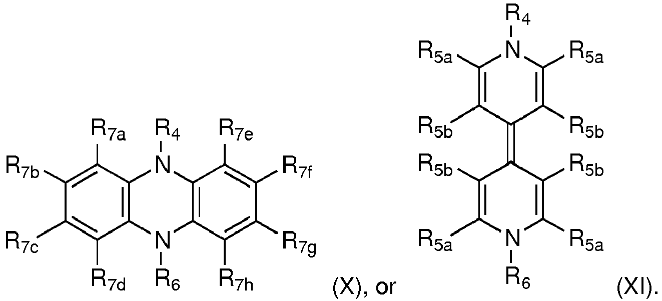 wherein R₄, R₆, R₅ₐ, R_{5b}, R_{5c}, R_{5d}, and R₇ₐ₋ₕ have the above meaning.

10. Method according to one of the preceding claims, **characterized in that** R₄ and R₆ are - Si (R₃ₐ, R_{3b}, R_{3c})₃, with R₃ₐ, R_{3b}, R_{3c} being C1-C3 alkyl, in particular methyl, ethyl, n-propyl, isopropyl.

11. Method according to one the preceding claims, **characterized in that** the cyclodiene of general formulae (IIa) is

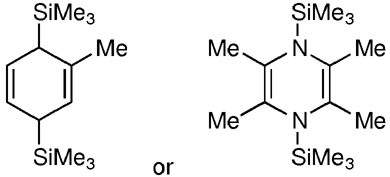

12. Method according to one of the preceding claims, **characterized in that** the cyclodiene of general formulae (IIb) is

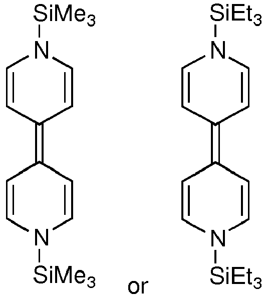

13. Method according to one of the preceding claims, **characterized in that** the reaction is carried out in a water, in an organic solvent or in a mixture thereof.

14. Method according to one of the preceding claims, **characterized in that** the organic solvent is selected from a group comprising dichloromethane, t-butanol, ethanol, methanol, toluene, methyl-t.butyl-ether, acetonitrile, tetrahydrofuran, N-methyl-2-pyrrolidone.
